(19) **Europäisches Patentamt**
**European Patent Office**
**Office européen des brevets**

(11) **EP 2 089 886 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(51) Int Cl.:
*G11B 27/031* *(2006.01)*    *G06F 17/30* *(2006.01)*
*H04N 5/14* *(2006.01)*

(21) Anmeldenummer: **08716663.3**

(22) Anmeldetag: **20.03.2008**

(86) Internationale Anmeldenummer:
**PCT/EP2008/002268**

(87) Internationale Veröffentlichungsnummer:
**WO 2008/113596 (25.09.2008 Gazette 2008/39)**

(54) **VERFAHREN ZUR ZEITLICHEN SEGMENTIERUNG EINES VIDEOS IN VIDEOBILDFOLGEN UND ZUR AUSWAHL VON KEYFRAMES FÜR DAS AUFFINDEN VON BILDINHALTEN UNTER EINBEZIEHUNG EINER SUBSHOT-DETEKTION**

METHOD FOR THE TEMPORAL SEGMENTATION OF A VIDEO INTO VIDEO IMAGE SEQUENCES AND FOR THE SELECTION OF KEY FRAMES TO LOCATE IMAGE CONTENT, TAKING INTO CONSIDERATION SUB-SHOT DETECTION

PROCÉDÉ DE SEGMENTATION TEMPORELLE D'UNE VIDÉO D'UNE SÉQUENCE VIDÉO ET DE SÉLECTION D'IMAGES CLÉS POUR TROUVER LE CONTENU D'IMAGES INCLUANT UNE DÉTECTION DE SOUS-PLANS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.03.2007 DE 102007013811**

(43) Veröffentlichungstag der Anmeldung:
**19.08.2009 Patentblatt 2009/34**

(73) Patentinhaber: **Fraunhofer-Gesellschaft zur Förderung der angewandten Forschung e.V. 80686 München (DE)**

(72) Erfinder: **PETERSOHN, Christian 13086 Berlin (DE)**

(74) Vertreter: **Schenk, Markus et al Schoppe, Zimmermann, Stöckeler & Zinkler Patentanwälte Postfach 246 82043 Pullach bei München (DE)**

(56) Entgegenhaltungen:
**EP-A- 1 377 047         US-A- 5 732 146
US-A1- 2004 090 453**

- **HONG LU ET AL: "Shot boundary detection using unsupervised clustering and hypothesis testing" COMMUNICATIONS, CIRCUITS AND SYSTEMS, 2004. ICCCAS 2004. 2004 INTERNAT IONAL CONFERENCE ON CHENGDU, CHINA 27-29 JUNE 2004, PISCATAWAY, NJ, USA,IEEE, US, 27. Juni 2004 (2004-06-27), Seiten 932-936Vol.2, XP010732058 ISBN: 978-0-7803-8647-1**
- **TE-WON LEE ET AL: "Unsupervised Image Classification, Segmentation, and Enhancement Using ICA Mixture Models" IEEE TRANSACTIONS ON IMAGE PROCESSING, IEEE SERVICE CENTER, PISCATAWAY, NJ, US, Bd. 11, Nr. 3, 1. März 2002 (2002-03-01), XP011025906 ISSN: 1057-7149**
- **KOBLA V ET AL: "COMPRESSED DOMAIN VIDEO INDEXING TECHNIQUES USING DCT AND MOTION VECTOR IN MPEG VIDEO" STORAGE AND RETRIEVAL FOR IMAGE AND VIDEO DATABASES 5. SAN JOSE, FEB. 13 - 14, 1997; [PROCEEDINGS OF SPIE], BELLINGHAM, SPIE, US, Bd. VOL. 3022, 13. Februar 1997 (1997-02-13), Seiten 200-211, XP000742383 ISBN: 978-0-8194-2433-4**

- SHAHRARAY B: "SCENE CHANGE DETECTION AND CONTENT-BASED SAMPLING OF VIDEO SEQUENCES" 7. Februar 1995 (1995-02-07), PROCEEDINGS OF THE SPIE, SPIE, BELLINGHAM, VA, PAGE(S) 2 - 13 , XP000672065 ISSN: 0277-786X Paragraph 3. "Camera induced scene change detection"

**Beschreibung**

Die Erfindung bezieht sich auf ein Verfahren zur zeitlichen Segmentierung eines Videos in Videobildfolgen und zur Auswahl von Keyframes für das Auffinden von Bildinhalten. Dabei umfasst es die aus dem Stand der Technik bekannten beiden Verfahrensschritte der zeitlichen Segmentierung des Videos in einzelne Shots, wobei jeder Shot jeweils eine Sequenz aufeinander folgender Videobilder umfasst, die mit einer Kameraeinstellung ohne Unterbrechung aufgenommen wurden, und der Keyframe-Selektion mit einer Zuordnung von den Bildinhalt repräsentierenden Keyframes zu den Videobildfolgen der ermittelten Zeitsegmente.

Video ist eine umfassende Informationsquelle. Die einzelnen Videobilder unterliegen jedoch keiner intrinsischen Ordnung wie sie beispielsweise für Buchstaben durch das Alphabet vorgegeben ist. Daher wurden zur Wiedererkennung von Videobildern verschiedene Beschreibungsformen, beispielsweise mittels Farb- oder Kanten-Histogrammen oder Gesichtsdeskriptoren, verwendet, wobei derartige Deskriptoren auf niedriger Ebene immer nur einen Aspekt des inhaltlich sehr komplexen Videobilds berücksichtigen. Auch höherwertige Deskriptoren berücksichtigen immer nur die Aspekte eines Videobildes, für die sie konzipiert wurden.

Bei der Videoanalyse und -indizierung sind grundsätzlich drei Hauptfragen zu klären:

- Welche zeitlichen Einheiten sollen indiziert werden?
- Wie sollen die Einheiten indiziert werden?
- Welcher Index soll mit welchem Label gekennzeichnet werden?

Für das Darstellen, Abstrahieren, Navigieren, Suchen und Auffinden von Videoinhalten ist die automatische Erkennung der zeitlichen Videostruktur eine wichtige Vorbedingung. Erst nach einer zeitlichen Videosegmentierung können die Einheiten indiziert werden. Wird hierzu die hierarchische Struktur eines Videos benutzt, kann die Suche in Analogie zur Suche in einem Buch oder einer Zeitschrift mit Kapiteln, Abschnitten, Absätzen, Sätzen und Wörtern erfolgen. Video kann verschiedene Modalitäten beinhalten. Neben dem visuellen Inhalt der Bilder kann auch auditiver Inhalt (Musik, Sprache, Geräusche, etc.) und ein begleitender Text vorhanden sein. Die unterste hierarchische Ebene der zeitlichen Struktur eines Videos bildet das einzelne Videobild für den visuellen Inhalt, eine einzelne Abtastung für den auditiven Inhalt und ein Buchstabe bzw. Wort für den textuellen Inhalt. In der vorliegenden Anmeldung wird jedoch nur das Segmentieren und Auffinden des visuellen Inhalts behandelt.

Auf einer höheren Ebene liegen die so genannten "Shots", die definiert werden als eine Sequenz aufeinander folgender Videobilder, die mit einer Kameraeinstellung ohne Unterbrechung aufgenommen wurden. Es gibt verschiedene Algorithmen zur Detektion sowohl von abrupten als auch von graduellen Shot-Grenzen. Zeitlich nebeneinander liegende Shots formen eine "Szene" (dabei wird in der vorliegenden Anmeldung dieser Begriff für eine höherwertige Einheit in einem fertigen Film und nicht als Synonym für Shots verwendet). Eine Szene wird durch ein einzelnes Ereignis, das in einer kontinuierlichen Umgebung ("setting") während einer kontinuierlichen Zeitperiode stattfindet, definiert. Algorithmen zur Segmentierung eines Videos in Szenen arbeiten oft auf der visuellen Ähnlichkeit zwischen einzelnen Shots, weil Shots in derselben Umgebung oft dieselben visuellen Eigenschaften aufweisen. In der höchsten Ebene liegen dann die Programme, beispielsweise Spielfilme, Nachrichtensendungen, Dokumentarfilme, Serien oder Heimvideos. Suchalgorithmen zum Auffinden von einzelnen Nachrichten oder Werbeeinblendungen existieren ebenfalls bereits. Teilweise wird zwischen der Programmebene und der Szenenebene noch eine "Sequenzebene" definiert. Dabei ist dieser Begriff nicht zu verwechseln mit dem Begriff einer "Sequenz von Videobildern" beispielsweise als Inhalt eines Shots.

Szenen sind definiert als Ereignisse, die in einer kontinuierlichen Zeitperiode in einer Umgebung stattfinden (Szene: ein Ereignis in einer Umgebung). Shots werden in einer kontinuierlichen Zeitperiode von einer Kamera kontinuierlich aufgenommen und bestehen aus einer entsprechenden Sequenz von Videobildern. Durch einen kontinuierlichen Kameraschwenk kann aber die Umgebung und damit die Szene in einem Shot wechseln. Da sich innerhalb eines Shots das Ereignis und die Umgebung ändern können, ist somit nicht jede Szenen-Grenze auch gleichzeitig eine Shot-Grenze. Umgekehrt ausgedrückt kann damit eine Szene auch nur Teile eines Shots enthalten. Dementsprechend kann auch der Bildinhalt innerhalb eines Shots sehr unterschiedlich sein. Deshalb werden derzeit auch einem Shot in der Regel mehrere Keyframes (Schlüsselbilder) zur Inhaltsdetektion zugeordnet. Für das Aussuchen der Keyframes (Keyframe-Selection) sind aus dem Stand der Technik ebenfalls verschiedene Algorithmen bekannt.

Die automatische zeitliche Segmentierung eines Videos oder einer Videosequenz läuft bisher normalerweise in zwei Schritten ab. Zunächst werden die Shot-Grenzen detektiert, um eine Segmentierung auf Shot-Ebene zu erhalten. Für die ermittelten Shots werden dann in der Regel mehrere Keyframes zur charakteristischen Angabe des Bildinhalts in selektiert. In einem dritten Verfahrensschritt werden danach Gruppen von benachbarten Shots zu Szenen zusammengefasst, um eine Segmentierung auf Szenenebene zu erreichen. Die Zusammenfassung von benachbarten Shots zu Szenen ist aber nur eine Näherung, da Szenengrenzen innerhalb von Shots hierbei nicht in der Segmentierung beachtet werden können.

## STAND DER TECHNIK

Aus dem Stand der Technik sind Algorithmen zur Szenen-Erkennung und - Definition bekannt, die in der Regel auf der Detektion von Shot-Grenzen beruhen. Einige Druckschriften befassen sich aber auch mit der Einbeziehung von Subshots in die Detektion.

In der US 7.127.120 B2 wird ein System beschrieben, das Video- und Audiomaterial einliest und automatisch eine Zusammenfassung in Form eines neuen Videos generiert. Dazu werden neben Shots auch Subshots als zeitliche Videosegmente im Originalvideo extrahiert, um nicht immer vollständige Shots in die Zusammenfassung übernehmen zu müssen. Die Zielsetzung bei der Subshot Extraktion hier ist weder das Finden sinnvoller Keyframes für Shots noch das Finden potentieller Szenengrenzen innerhalb eines Shots, sondern die Definition von Segmenten, die später in die Videozusammenfassung übernommen werden können. Das zur Subshot-Extraktion beispielhaft beschriebene Verfahren basiert auf der Analyse von Bildunterschieden zweier benachbarter Bilder (Frame Difference Curve, FDC). Dabei werden aber längerfristige Änderungen ignoriert, was sowohl zu starker Über- als auch Untersegmentierung führen kann. Dementsprechend eignen sich die in der US 7.127.120 B2 verwendeten Subshots nicht zum Finden möglichst weniger, aber repräsentativer Keyframes für Shots (Keyframe-Selection-Problem). Außerdem ist nicht sichergestellt, dass Szenengrenzen innerhalb von Shots auch Subshot-Grenzen im Sinne der US 7.127.120 B2 sind. Eine Definition von Szenen basierend auf Subshots wird nicht vorgenommen.

Aus der **Veröffentlichung I** von H. Sundaram et al.: "Determining Computable Scenes in Films and their Structures using Audio-Visual Memory Models" (Proc. 8th ACM Multimedia Conf., Los Angeles, CA, 2000) ist es bekannt, Szenen mit Hilfe von so genannten "shot-lets" zu erkennen. Dabei werden die Shots unabhängig vom ihrem visuellen Inhalt einfach Abschnitte ("shot-lets") mit der Länge von einer Sekunde geteilt. Hierbei handelt es sich um einen sehr einfachen Ansatz mit geringer zusätzlicher Komplexität für den Algorithmus zum Auffinden der Subshot-Grenzen. Szenengrenzen innerhalb von Shots können so automatisch gefunden werden. Durch die starre Bildungsregel der shot-lets ergibt sich aber in visuell statischen Shots mit sich nur wenig verändemdem Videomaterial eine starke Übersegmentierung. Deshalb wird in der Veröffentlichung I keine Lösung für das Problem der Zuordnung relevanter Keyframes zu den shot-lets angegeben.

Weiterhin ist es aus der **Veröffentlichung II** von K. Hoashi et al.(KDDI Laboratories): "Shot Boundary Determination on MPEG Compressed Domain and Story Segmentierung Experiments for TRECVID 2004" (TREC Video Retrieval Evaluation Online Proceedings, TRECVID, 2004) bekannt, bei der Darstellung von Nachrichten zusätzliche Punkte für potentielle Szenengrenzen in Shots zu setzen, wenn die Sprache des Nachrichtensprechers unterbrochen wird. Diese Art der weiteren Unterteilung funktioniert aber nur für Nachrichtensendungen oder ähnlich aufgebaute Sendungen. In der **Veröffentlichung III** von S. Treetasanatavorn et al.: "Temporal Video Segmentierung Using Global Motion Estimation and Discrete Curve Evolution" (Proc. IEEE ICIP, International Conference on Image Processing, pp. 385-388, Singapore, October 2004) werden Segmente von Shots definiert, die auf der Konsistenz von Bewegung zwischen benachbarten Videobildern beruhen. Diese Bewegungs-Segmente werden genutzt, um die Kamerabewegung innerhalb eines Shots zu beschreiben. In einer früheren **Veröffentlichung IV** von J. Maeda: "Method for extracting camera operations in order to describe subscenes in video sequences" (Proc. SPIE -- Volume 2187, Digital Video Compression on Personal Computers: Algorithms and Technologies, pp. 56-67, May 1994) werden ähnliche Segmente definiert und als "Subszenen" bezeichnet. Aber eine derartige Segmentierung dient der Beschreibung von Bewegung. Sie ist aber nicht geeignet, um Segmente mit unterschiedlichem visuellen Inhalt zu beschreiben.

Im Stand der Technik werden bislang die Probleme einer geeigneten Szenen-erkennung und -definition, die nicht auf Shot-Grenzen beruht, und einer geeigneten Keyframe-Auswahl für die gefundenen Segmente separat behandelt. In der Regel werden basierend auf den Segmentierungsergebnissen der Shotdetektion meist ein oder mehrere Keyframes pro Shot ausgewählt.

In der **Veröffentlichung V** von Zhuang et al.: "Adaptive key frame extraction using unsupervised clustering" in Proc. IEEE Int. Conf. Image Processing pp. 866-870, Chicago, IL, 1998) wird vorgeschlagen, alle Bilder eines Shots zu clustern und dann die Clustermittelpunkte als Keyframes zu verwenden. Zeitliche Segmente werden hierbei aber nicht definiert. Vielmehr müssen die Cluster nicht mit zeitlichen Segmenten korrespondieren. Ein Beispiel hierfür wäre ein Shot, in dem die Kamera von Person A auf Person B schwenkt und dann wieder zu Person A. Für diesen aus drei Segmenten bestehenden Shot würden zwei Cluster gebildet, ein Cluster für Person A, ein Cluster für Person B, und dementsprechend zwei Keyframes gewählt. Zeitliche Zusammenhänge zwischen den Keyframes eines Shots gehen hierbei also verloren. Auch in der **Veröffentlichung VI** von J. Kang et al.: "An Effective Method For Video Segmentierung And Sub-Shot Characterization" ICASSP 2002, Proc. Vol. 4, pp. IV-3652-3655) werden Subshots als Teile eines Shots mit homogenen Bewegungseigenschaften (z.B. ein zusammenhängender Zoom oder Schwenk) bezeichnet. So kann die Bewegung in einem Shot segmentweise beschrieben werden.

In der **Veröffentlichung VII** von Zhang et al.: "An integrated system for content-based video retrieval and browsing" (Pattern Recognition, vol. 30, no. 4, pp. 643-658, 1997) wird ein Ansatz zur Auswahl von Keyframes für einen Shot vorgestellt. Es wird festgestellt, dass ein Shot nicht immer sinnvoll durch nur ein einziges Keyframe repräsentiert werden kann. Daher werden neben dem ersten Bild eines Shots möglicherweise weitere Bilder als Keyframes ausgesucht. Dies geschieht mittels zweier Methoden (ein einfacher Vergleich der visuellen Ähnlichkeit zwischen Einzelbildern und globale Bewegungsanalyse zur Ermittlung von Kamerabewegungen). Die Keyframe-Auswahl wird somit zwar abhängig vom Videoinhalt vorgenommen, aber es werden keine Segmente (Subshots) definiert, die später für die Szenendefinition verwendet werden könnten. Außerdem wird immer mindestens das erste Bild eines Shots als Keyframe verwendet. Dieses Bild ist aber gerade bei graduellen Shotübergängen (Ausblendung, Einblendung, Überblendung, Wipe) ungünstig, da es den Shot schlecht repräsentiert.

Ein Verfahren zur Keyframe-Selektion auch für Subshots ist aus der US 2004/0012623 bekannt. Detektoren innerhalb der Videokamera liefern Daten über die Rotation der Kamera in X- bzw. in Y-Richtung. Außerdem wird die Benutzung des Zoom-Schalters durch den Benutzer an der Videokamera protokolliert. Basierend auf diesen Daten zur Kamerabewegung werden die Anfangspunkte von Schwenk-(Pan) und Zoombewegungen der Videokamera als Subshot-Grenzen innerhalb von Shots definiert. Dann werden Keyframes für die Subshots in Abhängigkeit von den Kamerabewegungsdaten festgelegt. Voraussetzung für das Verfahren ist also, dass für die Videosequenz die Kamerabewegungsdaten von der Kamera protokolliert werden und zur Verfügung stehen. Weiterhin führen ausschließlich Kamerabewegungen zu zusätzlichen Subshots und damit zusätzlichen Keyframes. Lokale Bewegungen von Objekten oder andere Effekte in bereits editierten Videos werden ignoriert. Somit werden nicht alle relevanten Änderungen für die Keyframe Selektion beachtet.

HONG LU ET AL: "Shot boundary detection using unsupervised clustering and hypothesis testing" COMMUNICATIONS, CIRCUITS AND SYSTEMS, 2004. ICCCAS 2004. 2004 INTERNAT IONAL CONFERENCE ON CHENGDU, CHINA 27-29 JUNE 2004, PISCATAWAY, NJ, USA,IEEE, US, 27. Juni 2004 (2004-06-27), Seiten 932-936Vol.2, XP010732058 ISBN: 978-0-7803-8647, wird als nächstliegender Stand der Technik gegenüber dem Gegenstand des Anspruchs 1 angesehen. Es offenbart ein Verfahren zum zeitlichen Segmentierung einer Sequenz von aufeinander folgenden Videobildern in kürzere Videoabschnitte mit geringer visueller Variation, mit folgenden Schritten: anwenden einer Clusterbildung auf die Videobilder ohne Berücksichtigung der zeitlichen Ordnung der Videobilder, um die Videobilder gemäß ihrer messbaren Bildeigenschaft unterschiedlichen Clusterkennzeichnungen zuzuordnen; setzen von Segment-Grenzen an Stellen einer Änderung der Clusterkennzeichnung in der zeitlichen Ordnung der Videobilder.

## AUFGABENSTELLUNG

Die **Aufgabe** besteht für das eingangs beschriebene, gattungsgemäße Verfahren zur zeitlichen Segmentierung eines Videos in Videobildfolgen und zur Auswahl von Keyframes für das Auffinden von Bildinhalten daher darin, durch spezielle Segmentation gewonnene spezielle Videobildfolgen so zu definieren und automatisch zeitlich zu segmentieren, dass sowohl Shots als auch Szenen aus einer oder mehreren zeitlich aufeinander folgenden solchen speziellen Videobildfolgen bestehen. Das bedeutet, dass die verwendeten speziellen Videobildfolgen auch zur Szenendefinition verwendbar sein sollen, ohne dass sie Szenengrenzen umfassen. Dabei soll aber trotz Verwendung möglichst weniger spezieller Videobildfolgen gleichzeitig sichergestellt sein, dass nur ein einziges Videobild (Keyframe) pro spezieller Videobildfolge ausreicht, um deren Bildinhalt umfassend zu repräsentieren. Weiterhin soll die zeitliche Segmentierung in die speziellen Videobildfolgen aber so einfach sein, dass Algorithmen zum Auffinden ihrer Grenzen einfach und zuverlässig umsetzbar sind. Es sollen möglichst wenige Informationen zur Grenzfestlegung benötigt werden.

Die erfindungsgemäße **Lösung** für diese Aufgabe ist dem Verfahrensanspruch zu entnehmen. Vorteilhafte Weiterbildungen des Verfahrens werden in den Unteransprüchen aufgezeigt und im Folgenden im Zusammenhang mit der Erfindung näher erläutert.

Bei dem erfindungsgemäßen Verfahren werden die in der Aufgabe geforderten speziellen Videobildfolgen in Form von Subshots definiert. Es gliedert sich in drei Abschnitte: zunächst wird für das Video bzw. für einzelne Videosequenzen eine an sich bekannte Shot-Detektion durchgeführt. Dann werden die ermittelten Shots in Subshots segmentiert, wobei nach größeren langfristigen Änderungen im Bildinhalt Subshot-Grenzen eingefügt werden, sodass sowohl Szenen- als auch Shot-Grenzen gleichzeitig Subshot-Grenzen sind. Zum Auffinden der Subshot-Grenzen können verschiedene Algorithmen unterschiedlicher Komplexität eingesetzt werden. Danach wird jedem Subshot genau ein für den Bildinhalt charakteristisches Keyframe zugeordnet.

Die Definition der mit der Erfindung gebildeten Subshots lautet: "Ein Subshot ist eine Folge aus aufeinander folgenden Videobildern, die ein Ereignis (event) zeigen, das mit einer einzelnen Kameraeinstellung (camera act) kontinuierlich in einer einzelnen kontinuierlichen Umgebung (setting) mit einer nur geringen Änderung im Bildinhalt aufgenommen wurde." Es handelt sich also bei der Definition eines Subshots nach der Erfindung also grundsätzlich um die Definition eines Shots mit den zwei Einschränkungen aus der Definition einer Szene, die einen Subshot auf eine Umgebung (setting) und ein Ereignis (Event) begrenzen. Darüber hinaus wird aber noch eine weitere, neue Randbedingungen in die Definition einbezogen: es werden nur geringe Änderungen im Bildinhalt zugelassen. Dadurch wind sichergestellt, dass Subshots immer kurze Videoabschnitte mit einer geringen visuellen Variation sind.

Nach der Subshot-Segmentierung wird dann jedem Subshot genau ein Keyframe zugeordnet. Die mit der Erfindung neu definierte Subshot-Segmentierung hat zwei bedeutsame Vorteile gegenüber bekannten Segmentierungen. Mit den Subshot-Grenzen werden alle potenziellen Szenenübergänge markiert, sodass die Subshots die Grundbausteine jeder Szene sind. Gleichzeitig sind die Subshots aber auch die Grundbausteine eines Shots, da alle Shot-Grenzen auch als Subshot-Grenzen verwendet werden. Durch diese Segmentierung ist sicher gewährleistet, dass sowohl Sequenz- als auch Shot-Grenzen gleichzeitig Subshot-Grenzen sind. Subshot-Grenzen zeigen also die Grenzen jedes Ereignisses (event) und die Grenzen jeder Umgebungseinstellung (setting) an. Zusätzlich können sowohl in den Szenen als auch in den Shots noch weitere Subshot-Grenzen liegen. Die Subshots stellen damit die kleinstmögliche Segmentierungseinheit als spezielle Videobildfolge dar, bei der gewährleistet ist, dass immer ähnliche Bildinhalte mit nur geringen Veränderungen zusammengefasst werden. Durch diese bei der Erfindung optimale Segmentierung kann dann jedem Subshot genau ein charakteristisches Keyframe zur Archivierung zugeordnet werden, wodurch das grundlegende Zuordnungsproblem gelöst wird. Die inhaltlichen Unterschiede in der Videosequenz werden ohne Informationsverlust, aber auch ohne Übersegmentierung durch die generierten Subshots sicher aufgezeigt. Die zeitliche Reihenfolge und die Anzahl der Subshots werden eindeutig durch die zeitliche Reihenfolge und die Anzahl der zugeordneten Keyframes aufgezeigt. Daher sind die ausgesuchten Keyframes hervorragend für eine Analyse, Sichtung (browsing), Indizierung und Suche im Video geeignet.

Subshots sind immer Abschnitte einzelner Shots, weil sie ebenfalls nur Folgen von Bildern einer einzelnen Kameraeinstellung umfassen. Nachdem mit einem Shot-Detektions-Algorithmus die Shot-Grenzen gefunden worden sind, kann deshalb jeder Shot mit einem weiteren Algorithmus in ein oder mehrere Subshots zerlegt werden. Dabei können die beiden Algorithmen bevorzugt für eine gleichzeitige, überlagerte Segmentierung auch synchron durchgeführt werden. Weiterhin ist es vorteilhaft, wenn am Anfang oder am Ende eines Shots, wenn dieser einen graduellen Übergang zu den benachbarten Shots aufweist, innerhalb des Shot-Übergangs keine weitere Segmentierung in Subshots vorgenommen wird, um eine zu starke Segmentierung in diesen Bereichen zu vermeiden. Durch die Maßnahme kann außerdem Rechenzeit zur Aufbereitung der Bildinhalte eingespart werden.

Ein Ereignis ist ein semantisches Konzept. Obwohl bereits viel in die Erforschung des semantischen Verständnisses investiert wurde, ist eine Ereignis- und Highlight-Detektion grundsätzlich definitionsabhängig und damit schwer umzusetzen. Deshalb werden derzeit Grenzen zwischen Ereignissen gleichgesetzt mit einer Änderung der Umgebung und/oder des Bildinhalts, beispielsweise, wenn Personen in die Szene kommen oder diese verlassen. Das Auffinden aller Änderungen in der Umgebung und im Bildinhalt garantiert somit in der Regel auch das Auffinden aller Grenzen zwischen unterschiedlichen Ereignissen. Nur durch eine Bewegung der Kamera relativ zur Umgebung kann die Umgebung während einer Kameraeinstellung verändert werden, z.B. durch Bewegung der Kamera von einem Raum in einen anderen. Weil aber verschiedene Umgebungen in der Regel auch visuell voneinander verschieden sind, können zur Detektion potenzieller Umgebungsänderungen nicht nur Bewegungen sondern auch Unterschiede im Bildinhalt genutzt werden. Solche Änderungen im Bildinhalt können durch Nutzung von einfachen Bildeigenschaften erfasst werden, beispielsweise können Farb- oder Kanten-Histogramme genutzt werden. Andere Bildeigenschaften können aber ebenso herangezogen werden. Im speziellen Beschreibungsteil werden verschiedene Algorithmen unterschiedlicher Komplexität erläutert, die sich für die Segmentierung von Videos bzw. Videosequenzen in Subshots nach der Erfindung eignen und auf Histogrammen oder Bewegungsanalyse beruhen. Die Subshot-Detektion wird mit einem Cluster-Algorithmus durchgeführt, wobei durch die darin angegebenen Schwellwerte, Grenzwerte oder tolerierbare Fehler das Maß für die zugelassenen geringe Veränderung die Differenz einfacher Bildeigenschaften aufeinanderfolgender Videobilder festgelegt wird. Die bei der Definition eines Subshots zugelassenen maximal erlaubten "geringen Änderungen im Bildinhalt" können durch diese Werte gezielt eingestellt werden. Über die Höhe der vorgegebenen Werte hat der Benutzer somit Einfluss auf das Maß der zugelassenen geringen Änderungen.

Eine Aufgabe der vorliegenden Erfindung kann somit auch darin gesehen werden, ein Verfahren zur Auswahl von Keyframes für das Auffinden von Bildinhalten sowie ein Verfahren zur zeitlichen Segmentierung von Videos bzw. von Sequenzen von aufeinanderfolgenden Videobildem zu schaffen, so dass auf Basis der ausgewählten Keyframes bzw. der Segmentierung eine Analyse, Sichtung, Indizierung oder Suche im Videomaterial erleichtert wird, wobei diese Aufgabe durch ein Verfahren gemäß dem Anspruch 1 gelöst wird.

## AUSFÜHRUNGSBEISPIELE

Ausbildungsformen des Verfahrens nach der Erfindung werden zu dessen weiterem Verständnis nachfolgend anhand der schematischen Figuren näher erläutert. Dabei zeigt:

**Figur 1**  ein Diagramm zu den verschiedenen Levels in einem Videoprogramm,
**Figur 2**  ein Diagramm zum Schwellwert-Algorithmus,
**Figur 3**  ein Diagramm zur Mehrheitsfilterung im Cluster-Algorithmus,
**Figur 4**  ein Diagramm zur Setzung der Subshot-Grenzen nach der Durchführung des Cluster-Algorithmus,
**Figur 5**  ein Schema zu den Bewegungsrichtungen der Pixel im Bewegungs-Algorithmus und

**Figur 6** ein Diagramm zur Segmentierungsgüte der drei Algorithmen.

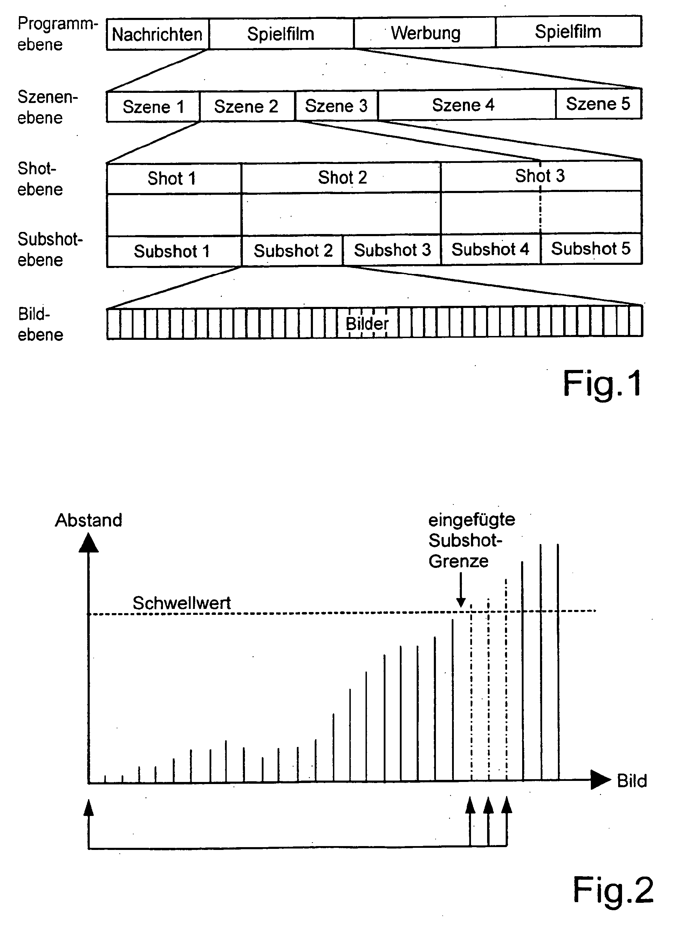

**Figur 1** zeigt die Hierarchie der verschiedenen Darstellungsebenen unter Anwendung des Segmentierungsverfahrens nach der Erfindung. In der Programmebene werden verschiedene Programme, beispielsweise Spielfilme, Nachrichten, Werbung angeboten. Jedes Programm, beispielsweise ein Spielfilm, gliedert sich in eine Vielzahl (durch schräge Linien angedeutet) von Szenen, die die Szenenebene bilden: Eine Szene wird durch ein einzelnes Ereignis, das in einer kontinuierlichen Umgebung ("setting") während einer kontinuierlichen Zeitperiode stattfindet, definiert. Ein Shot ist definiert als eine Sequenz aufeinander folgender Videobilder, die von einer kontinuierlichen Kameraeinstellung aufgenommen wurden. Daher führt ein Umgebungswechsel durch Kamerabewegung im Video zu einem Szenenwechsel, aber nicht zu einem Shot-Wechsel.

Dargestellt ist in Figur 1, dass die Szenengrenze zwischen Szene 2 und 3 nicht mit einer Shot-Grenze übereinstimmt. Bei dem Segmentierungsverfahren nach der Erfindung wird unterhalb der Shot-Ebene eine weitere Ebene eingeführt: die Subshot-Ebene. Zu erkennen ist einerseits, dass jede Szenen- und auch jede Shot-Grenze auch gleichzeitig eine Subshot-Grenze ist. Weiterhin ist aber auch zu erkennen, dass weitere Subshot-Grenzen innerhalb eines Shots liegen können. Ein Subshot wird nach der Erfindung als ununterbrochene Bildfolge einer Kameraeinstellung an einem Ort mit einer geringen Änderung des Bildinhalts definiert. Somit kann mit der Erfindung gewährleistet werden, dass einerseits innerhalb eines Subshots keine Szenengrenzen liegen, d.h. jede Szenengrenze auch eine Subshot-Grenze ist und somit Subshots eindeutig einzelnen Szenen zugeordnet werden können, und dass andererseits für jeden Subshot genau ein Keyframe ("Schlüsselbild") repräsentativ ist. Das Keyframe wird ausgesucht aus der untersten Hierarchieebene: der Bildebene, in der alle einzelnen Videobilder angeordnet sind. Eine Möglichkeit der Keyframe-Selektion wäre es beispielsweise, immer das erste, mittlere oder letzte Bild eines Subshots zu verwenden. Weitere Auswahlkriterien sind möglich.

Bei der Durchführung des Verfahrens nach der Erfindung wird als erster Verfahrensschritt eine Shot-Detektion durchgeführt. Das Auffinden von Shot-Grenzen ist allgemein aus dem Stand der Technik bekannt und wird beispielsweise in folgenden Veröffentlichungen beschrieben, deren Inhalt durch die Zitierung ausdrücklich zum Offenbarungsgehalt der vorliegenden Erfindung hinzugerechnet wird.

**Veröffentlichung VIII:** C. Petersohn. "Fraunhofer HHI at TRECVID 2004: Shot Boundary Detection System", TREC Video Retrieval Evaluation Online Proceedings, TRECVID, 2004,

**Veröffentlichung IX:** C. Petersohn. "Dissolve Shot Boundary Determination", Proc. IEE European Workshop on the Integration of Knowledge, Semantics and Digital Media Technology, pp. 87-94, London, UK, 2004, **Veröffentlichung X:** C. Petersohn. "Wipe Shot Boundary Determination", Proc. IS&T/SPIE Electronic Imaging 2005, Storage and Retrieval Methods and Applications for Multimedia, pp. 337-346, San Jose, CA, 2005 und

**Veröffentlichung XI:** R. Lienhart. "Comparison of Automatic Shot Boundary Detection Algorithms." Proc. SPIE Storage and Retrieval for Image and Video Databases VII, vol. 3656, p. 290-301, 1999.

Als letzter Verfahrensschritt des Verfahrens nach der Erfindung wird dann eine Keyframe-Selektion mit einer Zuordnung von jeweils genau einem den Bildinhalt vollständig repräsentierenden Keyframe ("Schlüsselbild") zu jedem detektierten Subshot vorgenommen. Hierbei kann es sich um ein beliebiges Videobild aus dem Subshot handeln, da dieser in seiner Länge bei der Erfindung eben gerade so festgelegt wurde, dass alle enthaltenen Videobilder einen sehr ähnlichen Bildinhalt zeigen. Beispielsweise kann das mittlere Videobild in einem Subshot als Keyframe ausgewählt werden.

Der zweite Verfahrensschritt umfasst die durch die Erfindung eingeführte Subshot-Detektion, die nach verschiedenen Algorithmen zur Ermittlung der Differenz der Bildinhalte aufeinander folgender Videobildern durchgeführt werden kann. Im Folgenden werden drei verschiedene Algorithmen unterschiedlicher Komplexität als Beispiele für einsetzbare Algorithmen genannt wobei nur der Cluster-Algorithms Teil der Erfindung ist.

**SCHWELLWERT-ALGORITHMUS** (nicht Teil der Erfindung)

Dieser einfache Algorithmus misst die langfristigen Änderungen im Bildinhalt. Übersteigen diese langfristigen Änderungen einen Schwellwert, so wird eine Subshot-Grenze eingefügt. "Langfristig" bedeutet dabei, dass Bildänderungen nicht nur zwischen benachbarten Videobildern, sondern auch zwischen zeitlich weiter voneinander entfernten Videobildern gemessen und ausgewertet werden. Der Bildinhalt wird durch eine messbare Bildeigenschaft approximiert. Dies kann z.B. ein Farb-Histogramm, Kanten-Histogramm oder auch ein Bild-Deskriptor nach dem MPEG-7 Standard sein. Weitere Möglichkeiten existieren. Um die Änderung des Bildinhalts zu quantifizieren, wird eine Distanzfunktion auf die gemessenen Bildeigenschaften zweier Bilder angewandt. Beispielhaft wird im Folgenden die Verwendung von Histogrammen beschrieben.

Es können Histogramme mit unterschiedlich vielen Quantisierungsstufen und in unterschiedlichen Farbräumen, beispielsweise YUV- oder HSV-Farbraum, verwendet werden. Dabei können die drei Kanäle separat oder als dreidimensionale Vektoren interpretiert werden. Beste Ergebnisse werden erzielt, wenn die Farbwerte der Bildpunkte im HSV-Farbraum, die Parameter H (Hue - Farbton) und S (Saturation - Sättigung), als zweidimensionale Vektoren interpretiert und für ein Histogramm mit 16 mal 16 Balken verwendet werden. Der Grauwert V (Value) wird ignoriert, weil dieser sehr empfindlich gegenüber Helligkeitsveränderungen ist. Jeder der 16 mal 16 Balken repräsentiert dann die Anzahl der Pixel (Bildpunkte) in einem Bild, deren Farbwert in einem bestimmten - für jeden Balken anderen - Bereich liegt.

Die benötigte Distanzfunktion für die Histogramme als messbare Bildeigenschaft basiert auf Histogramm-Intersektion. Die Distanz d zwischen den Histogrammen zweier Bilder F und F' ist definiert als:

$$d = 1 - \frac{1}{pc}\sum_{i=1}^{k}\min(H(F,i),H(F',i)) \qquad (1)$$

mit
pc = Anzahl der für die Histogramm-Erstellung genutzten Pixel
i = Laufindex
k = Anzahl der Balken
H(F,i) = iter Balken des Histogramms von Videobild F (Anzahl der Pixel mit Farbwert im iten Bereich)
min = Minimum

Bei einem 16x16 Balken-Histogramm ist k= 256. Die Distanzfunktion hat einen Wertebereich von [0,1]. Je geringer die Distanz zwischen zwei Bildern ist, desto ähnlicher sind sich die Bilder.

In diesem einfachen Schwellwert-Algorithmus wird das erste Videobild (Frame) in einem Shot oder das erste Videobild hinter einem graduellen Übergang als Referenzbild genutzt. Dann wird die Distanz zwischen den Histogrammen dieses Referenzbilds und jedem nachfolgenden Videobild gebildet. Wenn die Distanz beispielsweise bei drei hintereinander folgenden Videobildern einen vorgegebenen Schwellwert (z.B. 0,3) übersteigt, wird eine Subshot-Grenze vor diesen drei Videobildern eingefügt. Das erste der drei Videobilder wird dann das neue Referenzbild (vergleiche **Figur 2**).

Der Vorteil bei diesem Algorithmus liegt in seiner geringen Komplexität. Die Fehlerrate ist aber relativ hoch, weil kurzfristige Störungen wie einzelne abweichende Bilder, beispielsweise durch Blitzlichter, kurzfristig veränderte Bilder, oder sich sehr schnell im Vordergrund bewegende Objekte, Fehler hervorrufen können. Das wird zwar durch den Vergleich von drei aufeinander folgenden Bildern abgemildert, kann aber nicht vollständig verhindert werden. Außerdem wäre es wünschenswert, die Subshot-Grenzen in die Mitte einer Veränderung zu legen. Dies kann bei der geschilderten Vorgehensweise aber nicht garantiert werden. Die Anwendung des Schwellwert-Algorithmus dient daher mehr als Ermittlung einer Ausgangsposition. In der Praxis wird dieser Algorithmus wohl eher nicht angewendet werden.

## CIUSTER-ALGORITHMUS (Erfindung)

Durch die Anwendung eines Cluster-Algorithmus mit einer Clusterung von Bild-Deskriptoren können Fehler bei der Detektion aufgrund von einzelnen, abweichenden Bildern reduziert und Subshot-Grenzen zentriert angeordnet werden. Der vorgestellte Cluster-Algorithmus detektiert Subshot-Grenzen ebenfalls basierend auf der Analyse der Bildinhaltsänderung. Es können die gleichen messbaren Bildeigenschaften verwendet werden wie beim Schwellwert-Algorithmus. Eine Möglichkeit wäre also z.B. wieder die Verwendung eines 16x16 Balken-Histogramms im HSV-Farbraum. Allgemein bekannte Cluster-Methoden sind der k-means-Algorithmus und hierarchisches Clustern. Bei dem Detektionsverfahren nach der Erfindung ergab die k-means-Cluster-Methode, die einfach und robust ist, die besten Ergebnisse.

Den k-means-Cluster-Algorithmus gibt es in zwei Versionen. Er kann entweder auf Vektoren im euklidischen Raum angewendet werden oder beliebige Eigenschaften verwenden, wenn eine mathematische Metrik und eine Distanzfunktion existiert, die die Distanz zwischen zwei Ausprägungen der verwendeten Eigenschaft definiert. Die Distanzfunktion gemäß Gleichung (1) erfüllt diese Anforderungen. Viele andere messbare Bildeigenschaften und Distanzfunktionen sind einsetzbar.

Für das Detektionsverfahren nach der Erfindung werden messbare Bildeigenschaften verwendet, die sich direkt als Vektor im euklidischen Raum interpretieren lassen. Es können zwei Methoden für die Vektorenzuordnung zu den Bildern eingesetzt werden. Für das Beispiel des 16x16 Balken- Histogramms im HSV-Farbraum können die 256 Balken im Histogramm auf zwei Arten verwendet werden. Vorher müssen sie allerdings normalisiert vorliegen, d.h., sie werden jeweils durch die Anzahl der Pixel im Bild geteilt, sodass die Summe aller 256 Balken eines Histogramms zusammen 1 ergibt. Dann können die Balken zum einen direkt als Vektorkomponenten interpretiert werden. Dies ergibt dann einen Vektor im 256-dimensionalen Raum. Zum anderen kann aber auch zunächst die hohe Anzahl der Dimensionen durch multidimensionales Scaling (MDS) reduziert werden, um dann Vektoren mit weniger Dimensionen für das Clustering zu verwenden. Die erste Methode unter direkter Nutzung aller Balken in einem Histogramm ergab bei der Erprobung die besten Ergebnisse.

In Abhängigkeit von der Variation des Bildinhalts in einem Shot ergibt sich eine entsprechende Variation der Anzahl erforderlicher Subshots und damit der Anzahl der Cluster, die einen Shot beschreiben. Zur Clusterbildung können spezielle Parameter, wie das Schwarz- oder das Akaike-Information-Kriterium, herangezogen werden. Besser ist eine Methode, die den maximalen tolerierbaren Fehler nach der Clustering (Clusterfehler, z.B. 0,1) festlegt. Dabei wird der k-means-Algorithmus mehrfach mit steigender Clusterzahl ausgeführt. Eine höhere Clusteranzahl führt zu kleineren Clustern und damit zu geringeren durchschnittlichen Distanzen der Vektoren zum jeweiligen Clustermittelpunkt. Die zeitlichen Differenzen zwischen den einzelnen Bildern werden dabei während der Clustering vernachlässigt.

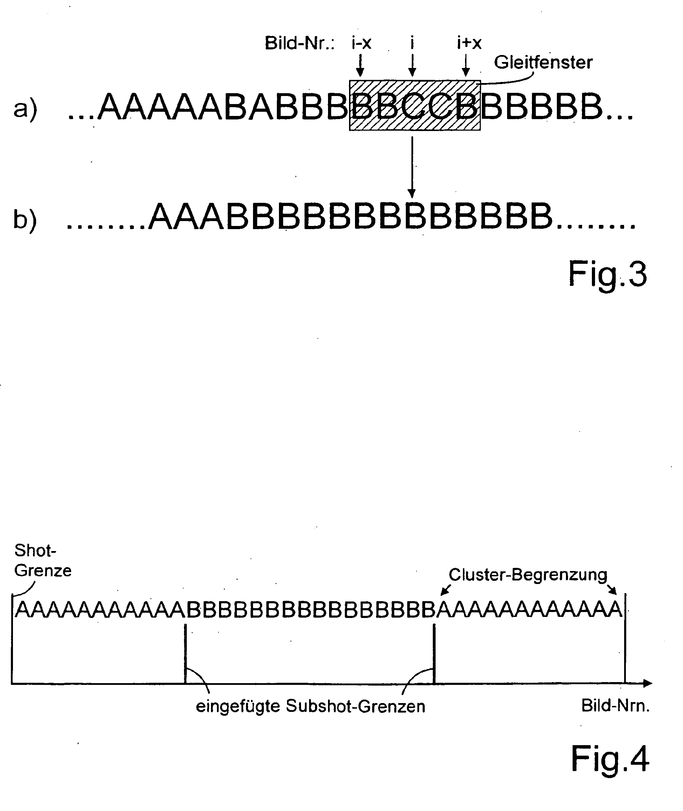

Die zeitliche Reihenfolge wird dann anschließend bei der Zuordnung der einzelnen Clusterlabels zu den Subshot-Grenzen verwendet. Dabei werden zwei Filter zur Berücksichtung von "Ausreißer-Bildem" und von Fluktuationen der Cluster-Kennzeichnung (Label) eingesetzt. Zunächst wird eine "Mehrheitsfilterung" (engl. "majority vote") durchgeführt: eine minderheitliche Cluster-Kennzeichnung für ein Videobild i wird in die mehrheitliche Cluster-Kennzeichnung derjenigen Videobilder überführt, die um x Videobilder vor und hinter dem Videobild i liegen. Der Parameter x wird dabei durch Erfahrung ermittelt und kann beispielsweise 2 betragen (vergleiche **Figur 3,** oben: vor der Filterung, unten: nach der Filterung). Mit dem zweiten Filter wird sichergestellt, dass Subshots eine minimale Länge von k, beispielsweise 10, Bildern haben. Falls die gleiche Cluster-Kennzeichnung weniger als k hintereinander liegenden Bildern zugeordnet wurde, so wird diesen Bildern die Cluster-Kennzeichnung zugeordnet, die die Bilder des Segments davor oder danach haben, abhängig davon, zu welchen Bildern sie eine kleinere durchschnittliche Distanz gemäß Gleichung 1 haben. Nach der Filterung werden in der zeitlichen Reihenfolge an Stellen der Änderung der Cluster-Kennzeichnungen die Subshot-Grenzen gesetzt (vergleiche **Figur 4).** Die Cluster-Methode ist robuster gegenüber Ausreißer-Bildem als die Schwellwert-Methode. Ein weiterer Vorteil ist, dass auf Grund der speziellen Clusterberechung von k-means die Clusterübergänge und damit die Subshotgrenzen mittig bei Bildveränderungen positioniert werden.

**BEWEGUNGS-ALGORITHMUS** (nicht Teil der Erfindung)

Änderungen in der Umgebung (setting) innerhalb eines Shots werden immer durch eine Kamerabewegung erzeugt, wohingegen Änderungen in einem Ereignis (event) oder im Bildinhalt sowohl durch Kamerabewegung als auch durch eine Objektbewegung erzeugt werden können. Der dritte vorgeschlagene Algorithmus benutzt deshalb die Bewegungsanalyse zur Bestimmung der Subshot-Grenzen.

In einem ersten Schritt wird dazu das Bewegungs-Vektorfeld zwischen fortlaufenden Bildpaaren bestimmt. Dazu kann ein Block-Matching, angewendet beispielsweise auf Blocks mit 8x8 Pixeln, genutzt werden. Für kodierte (beispielsweise nach MPEG Standard) Videosequenzen können auch die Bewegungsvektoren der Kodierung genutzt werden, wodurch sich der Rechenaufwand verringert.

Nicht alle ermittelten Bewegungsvektoren repräsentieren jedoch auch eine reale Bewegung. Beispielsweise sind die Bewegungsvektoren $mv(i,j)$ für Blocks $(i,j)$ mit geringen inhaltlichen Details nicht zuverlässig ermittelbar. Deshalb werden in dem hier benutzten Bewegungs-Algorithmus die Bewegungsvektoren von Blocks mit einer Pixelintensitätsvarianz unterhalb eines vorgegebenen Grenzwertes vernachlässigt (siehe unten $m(i,j)$).

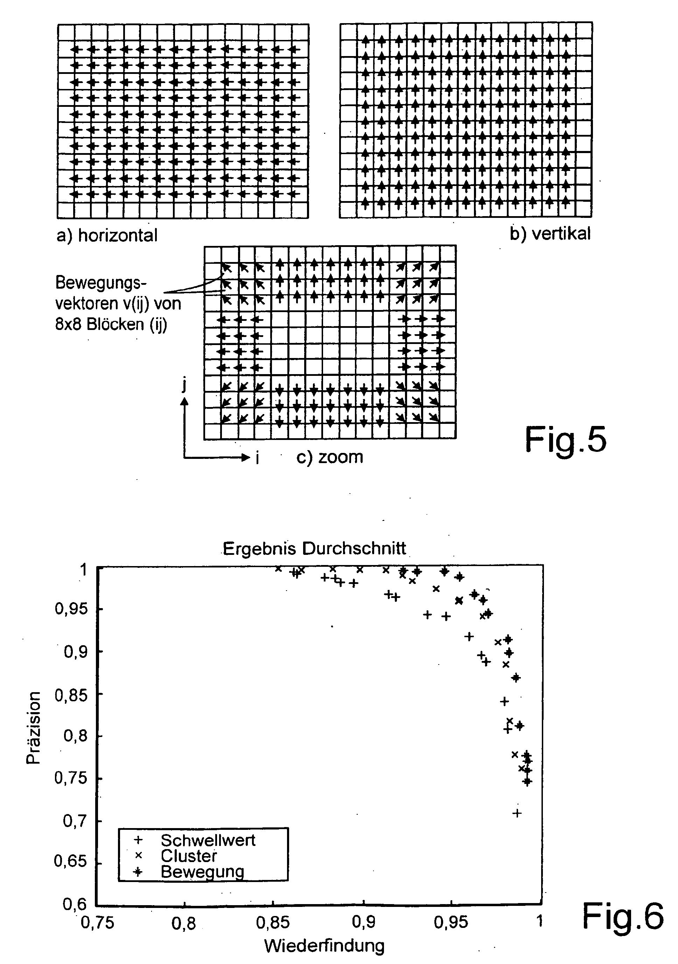

Um die Höhe der Änderung zwischen zwei Bildern angeben zu können, wird der Begriff der "Verlagerung" eingeführt. Hiermit kann angegeben werden, um welchen mittleren Betrag sich die Pixel eines Bildes in Bezug auf die Größe des Bildes und in Bezug auf das nachfolgende Bild verlagert haben. Die Verlagerung wird getrennt für drei Bewegungsrichtungen ermittelt. Hierbei handelt es sich um die horizontale (h) und die vertikale (v) Bewegungsrichtung sowie um die Zoomrichtung (z), bei der gleichzeitig eine horizontale, eine vertikale und eine in die Ecken des Bildes gerichtete) schräge Bewegung auftritt (vergleiche **Figur 5**). Die gleiche Indizierung gilt für die Bewegungsvektoren. Die Verlagerungen berechnen sich zu:

$$D_h = \frac{\sum_{i,j} m(i,j)mv(i,j) \bullet v_h(i,j)}{\sum_{i,j} m(i,j)|v_h(i,j)|Breite}$$

$$D_v = \frac{\sum_{i,j} m(i,j) mv(i,j) \bullet v_v(i,j)}{\sum_{i,j} m(i,j) |v_v(i,j)| H\ddot{o}he}$$

$$D_z = \frac{\sum_{i,j} m(i,j) mv(i,j) \bullet v_z(i,j)}{\sum_{i,j} m(i,j) |v_z(i,j)| \sqrt{Breite * H\ddot{o}he}}$$

mit

$D_h$ = horizontale Verlagerung

$D_v$ = vertikale Verlagerung

$D_z$ = Verlagerung durch Zoom

i,j = Blockindizes

m(i, j) = Matrix = 1 für eine Intensitätsvarianz der Pixel im Block oberhalb des vorgegebenen Grenzwertes
= 0 für eine Intensitätsvarianz der Pixel im Block unterhalb des vorgegebenen Grenzwertes

mv(i,j) = Bewegungsvektor von Block (i,j)

$v_{\{h,v,z\}}(i,j)$ = Vektorfeld, das je nach Bewegungsrichtung wie in Fig. 5a-c gezeigt unterschieldich ist

$|v_{\{h,v,z\}}(i,j)|$ = Länge des Vektors $v_{\{h,v,z\}}(i,j)$
= 1 für jeden Block mit zumindest einem Vektor $v_{\{h,v,z\}}$ (siehe Fig. 5a-c)
= 0 für jeden Block außerhalb der betrachteten Reihen und Spalten sowie in der Zoommitte (siehe Fig. 5a-c),
• =Skalarprodukt.

Die zeitliche Serie solcher Verlagerungswerte muss nun durch ein Mittelwertfilter gefiltert werden, um hochfrequentes Rauschen zu entfernen. Hochfrequentes Rauschen entsteht z.B. bei schlechter Kameraführung (Schüttelbewegungen) oder, wenn sich ein Darsteller hin und her bewegt, sodass zwar eine große Bewegung auftritt, aber keine große langfristige Veränderung des Bildinhalts. Mit dem Mittelwertfilter werden beispielsweise alle Verlagerungswerte eine halbe Sekunde vor und eine halbe Sekunde nach dem jeweils aktuellen Verlagerungswert betrachtet. Ohne Filterung würden im weiteren Ablauf zu große Werte für die Gesamt-Verlagerung berechnet werden, sodass sich eine zu große Anzahl von erforderlichen Subshots ergeben würde. Die gefilterten Verlagerungen für die drei Richtungen sind definiert durch:

$$D_{dir,filt}(i) = \frac{1}{2 * k + 1} \sum_{j=i-k}^{j=i+k} D_{dir}(j)$$

mit

dir = eine der drei Bewegungsrichtungen (h-horizontal, v-vertikal, z-Zoom),

k = Anzahl der Verlagerungswerte vor und hinter dem Verlagerungswert des aktuell betrachteten Bildpaares,

i = Nummer des aktuell betrachteten Bildpaares und

j = Laufindex.

Die Anzahl der Verlagerungswerte vor und hinter dem Verlagerungswert des aktuell betrachteten Bildpaares ist abhängig von der Bildwiederholrate des Videos und kann z.B. so gewählt werden, dass sie der halben Bildwiederholrate entspricht.

Die solchermaßen ermittelten Verlagerungen $D_{h,filt}$, $D_{v,filt}$, $D_{z,filt}$ werden dann zu einer Gesamt-Verlagerung D addiert, die die Höhe der Kamera- und/oder Objektbewegung zwischen zwei zeitlich benachbarten Bildern repräsentiert:

$$D = |D_{h,filt}| + |D_{v,filt}| + s^*|D_{z,filt}|$$

mit s = Skalierungsfaktor für den Zoom, z.B. s=1.

Der Absolutwert der Verlagerungen für die einzelnen Richtungen muss verwendet werden, da die gefilterten Verlagerungen gerichtet sind. Das bedeutet z.B. für die vertikale Verlagerung, dass Auf- und Niederbewegungen unterschiedliche Vorzeichen bei der Verlagerung erzeugen. Die Gesamt-Verlagerung D hingegen ist nicht mehr gerichtet und beschreibt lediglich die gesamte Verlagerung zwischen zwei Bildern unabhängig von ihrer Richtung. Für die Folge von Bildern in einem Shot können deren Gesamtverlagerungen dann wiederum zu einer Summe $\Sigma D$ addiert werden. Wenn der Wert dieser Summe oberhalb eines vorgegebenen Grenzwertes $th_d$ liegt, beispielsweise $th_d = 0{,}5$, werden ein oder mehrere Subshot-Grenzen in den entsprechenden Shot eingefügt. Eine Gesamtverlagerung $\Sigma D$ von 0,5 bedeutet, dass die Pixel in den Bildern des Shots im Mittel um die Hälfte der Bildbreite oder Bildhöhe in die entsprechende Richtung gewandert sind. Die Anzahl #ssb der einzufügenden Subshot-Grenzen kann dann berechnet werden mit:

$$\#ssb = \Sigma D\ /\ th_d$$

Danach werden die Orte der einzufügenden Subshot-Grenzen so festgelegt, dass jedem Subshot der gleiche Betrag der summierten Gesamtverlagerung $\Sigma D$ zugeordnet ist. Um die Fehlerrate zu verringern, werden Subshot-Grenzen jedoch nur eingeführt, wenn eine vorgegebene minimale Änderung im Bildinhalt $th_{min}$ auftritt. Hierfür muss die Distanz bezüglich der Bildeigenschaften gemäß Gleichung 1 zwischen dem ersten und dem letzten Bild des aktuellen Subshots größer als $th_{min}$ sein, mit z.B. $th_{min}=0{,}1$. Der Vorteil des Bewegungs- Algorithmus liegt darin, dass sich die Subshot-Grenzen mittels von Bewegungsanalyse sehr gut auffinden lassen. Bewegung ist eine wichtige beschreibende Eigenschaft für den Bildinhalt, weil die Bewegung der Hauptgrund für Änderungen im Bildinhalt ist. Dem gegenüber steht der relativ große Berechnungsaufwand, der aber durchaus zu handhaben ist. Allerdings können andere Eigenschaften, die eine Änderung im Bildinhalt hervorrufen, mit der Bewegungsanalyse nicht erfasst werden. Von daher ist es besonders vorteilhaft, wenn beispielsweise der Cluster-Algorithmus und der Bewegungsalgorithmus miteinander kombiniert werden.

**TESTERGEBNISSE**

Um die Leistungsfähigkeit der drei beschriebenen Algorithmen beurteilen zu können und die beschriebenen Parameter inkl. Schwellwerte sinnvoll einstellen zu können, wurden Tests an einer Reihe von Videosequenzen durchgeführt. Dazu wurde für jeden Shot die Anzahl und Position sinnvoller Subshotgrenzen markiert. Hier wurde also vom Menschen manuell entschieden, wann ein Ereigniswechsel stattgefunden hat, wann eine Umgebung verlassen wurde bzw. wann eine Bildänderung groß genug war, um eine Subshot-Grenze notwendig werden zu lassen. Danach wurden verschiedene Parameter für die drei Algorithmen getestet und die jeweilige Segmentierungsqualität bestimmt.

Manuell bestimmte Subshot-Grenzen können bei der automatischen Segmentierung entweder gefunden werden (k - korrekt), nicht gefunden werden (ng - nicht gefunden) oder es können weitere Subshot-Grenzen fälschlich hinzugefügt (fh - fälschlich hinzugefügt) werden. Die Anzahl von k, ng und fh werden als #k, #ng und #fh bezeichnet. Als Bewertungsmaß für die Segmentierungsqualität werden zwei Größen verwendet: Der Anteil der korrekt wieder gefundenen Subshot-Grenzen (Wiederfindung, Recall) und der Anteil der korrekten Subshot-Grenzen an den gefundenen Subshot-Grenzen (Präzision). Sie sind definiert als:

$$Wiederfindung = \frac{\#k}{\#k + \#ng}$$

$$Pr\ddot{a}zision = \frac{\#k}{\#k + \#fh}$$

Werte von 0,9 für Wiederfindung und Präzision bedeuten beispielsweise, dass von 10 manuell markierten Subshot-Grenzen 9 korrekt gefunden wurden, 1 nicht gefunden wurde und 1 falsch eingefügt wurde. Dies würde bereits eine verhältnismäßig gute Segmentierung bedeuten. Eine perfekte, fehlerfreie Segmentierung würde für Wiederfindung und Präzision Werte von 1,0 erreichen. Durch Variation der Parameter für die drei Algorithmen können verschiedene Werte für Wiederfindung und Präzision erreicht werden. Für einen Algorithmus zieht eine Erhöhung des Wiederfindungswertes durch Veränderung der Parameter meist eine Verkleinerung beim Präzisionswert nach sich und anders herum.

Die Ergebnisse der Segmentierungsqualität des Verfahrens nach der Erfindung für eine weite Spanne von Parametern bei den drei Algorithmen zeigt **Figur 6.** Die in den Ausführungsbeispielen genannten Parameterwerte gelten für Parameterwerte, bei denen Wiederfindung und Präzision etwa gleich groß sind. Beim Vergleich der drei Algorithmen in Figur 6 ist zu erkennen, dass die Segmentierungsqualität des Bewegungs-Algorithmus am besten, die des Schwellwert-Algorithmus am schlechtesten ist. Insgesamt liegt die Segmentierungsqualität des Verfahrens nach der Erfindung aber auf hohem Niveau.

In anderen Worten ausgedrückt, ist ein Ausführungsbeispiel der vorliegenden Erfindung beispielsweise ein Verfahren zur zeitlichen Segmentierung eines Videos in Videobildfolgen und zur Auswahl von Keyframes für das Auffinden von Bildinhalten mittels der Videobildfolgen mit den Verfahrensschritten:

- Shot-Detektion: zeitliche Segmentierung des Videos in einzelne Shots, wobei jeder Shot jeweils eine Sequenz aufeinander folgender Videobilder umfasst, die mit einer Kameraeinstellung ohne Unterbrechung aufgenommen wurden,

- Subshot-Detektion: zeitliche Segmentierung jedes Shots in einzelne Subshots, wobei

  ➢ jeder Subshot nur maximal ein Ereignis in maximal einer Umgebung enthält und innerhalb von Shots auftretende Grenzen einer Szene, die ein Ereignis in einer kontinuierlichen Zeitperiode und einer kontinuierlichen Umgebung zeigt, gleichzeitig Subshot-Grenzen sind,
  ➢ jeder Subshot jeweils eine Sequenz aufeinander folgender Videobilder des Shots umfasst, die nur eine geringe Veränderung im Bildinhalt zeigt, und wobei
  ➢ als Maß für eine geringe Veränderung die Differenz einfacher Bildeigenschaften verschiedener Videobilder im Shot analysiert und ausgewertet wird,
  und

- Keyframe-Selektion: Zuordnung von genau einem den Bildinhalt des Subshots repräsentierenden Keyframe zu jedem Subshot.

Dabei kann bei dem Verfahren beispielsweise
die Shot- und die Subshot-Detektion zeitgleich durchgeführt werden,
bei Auftreten von graduellen Übergängen am Anfang oder am Ende eines Shots in diesen Bereichen keine Subshot-Detektion durchgeführt werden,
die Farb- oder Kantenverteilung einfache messbare Bildeigenschaften eines Videobildes sein,
die messbare Bildeigenschaft ein Histogramm mit k Balken sein, wobei die Distanzfunktion für die Histogramme der Videobilder F und F' definiert ist als $d = 1 - \dfrac{1}{pc} \sum_{i=1}^{k} \min(H(F,i), H(F',i))$ mit pc = Anzahl der für die Histogramm-Erstellung genutzten Pixel, i = Laufindex, k = Anzahl der Balken, H(F,i) = iter Balken des Histogramms von Videobild F (Anzahl der Pixel mit Farbwert im iten Bereich) und min = Minimum,
die Subshot-Detektion mit einem Schwellwert-Algorithmus, einem Cluster-Algorithmus und/oder einem Bewegungs-Algorithmus durchgeführt werden, wobei durch die darin angegebenen Schwellwerte, Grenzwerte oder tolerierbaren Fehler das Maß für die zugelassenen geringe Veränderung die Differenz einfacher Bildeigenschaften aufeinanderfolgender Videobilder festgelegt wird,
ein Schwellwert-Algorithmus durchgeführt werden mit den Schritten 1) Approximierung des Bildinhalts eines Videobilds durch eine messbare Bildeigenschaft, 2) Berechnung der Veränderung des Bildinhalts mittels einer Distanzfunktion für die messbaren Bildeigenschaften zweier Videobilder F und F', wobei F das erste Videobild eines Subshots ist und F' ein schrittweise von F immer um ein Bild weiter entferntes Videobild bezeichnet und 3) Setzen einer Subshot-Grenze bei Erreichen eines vorgegebenen Schwellwertes für die Distanz bei mehreren aufeinander folgenden Videobildem F',
wobei die Grenze vor dem ersten dieser Videobilder gesetzt wird, wobei der Schwellwert beispielsweise mit 0,3 vorgegeben sein kann,
ein k-means-Cluster-Algorithmus durchgeführt werden mit den Schritten 1) Approximierung des Bildinhalts eines Videobilds durch eine messbare Bildeigenschaft, 2) Ermittlung von Clusterkennzeichnungen basierend auf den messbaren Bildeigenschaften für die Bilder eines Shots ohne Berücksichtigung der zeitlichen Zuordnung der Videobilder mittels 2a) Setzen der Anzahl der Cluster auf 1, 2b) Ausführen des k-means-Algorithmus und 2c) Überprüfung des resultierenden Clusterfehlers mit, falls dieser größer als ein vorgegebener Schwellwert ist, Erhöhen der Anzahl der Cluster um 1 und Fortführung bei Schritt 2b, und, falls dieser kleiner als ein vorgegebener Schwellwert ist, Weitermachen mit dem nächsten Verfahrensschritt 3, 3) Zuordnung der ermittelten Cluster-Kennzeichnungen zu Videobildern in ihrer zeitlichen Reihenfolge, 4) Durchführung einer Mehrheitsfilterung: eine minderheitliche Cluster-Kennzeichnung für ein Videobild i wird in die mehrheitliche Cluster-Kennzeichnung derjenigen Videobilder überführt, die um x Videobilder vor und hinter dem Videobild i liegen, 5) Durchführung einer Zeitfilterung in Abhängigkeit einer vorgegeben Anzahl k von Videobildem in einem Subshot: weniger als k Videobilder mit derselben Cluster-Kennzeichnung werden der Cluster-Kennzeichnung der davor oder dahinter liegenden Videobilder mit der größeren mittleren Ähnlichkeit zugeordnet, wobei die Ähnlichkeit mit Hilfe einer Distanzfunktion für die messbaren Bildeigenschaften der Videobilder ermittelt wird, und 6) Markierung jedes Wechsels in der Cluster-Kennzeichnung in der zeitlichen Reihenfolge der Videobilder als Subshot-Grenze, wobei zum Beispiel die messbare Bildeigenschaft ein Histogramm mit i Balken sein kann und die Balken vor Ausführung des k-means-Algorithmus normalisiert werden können, sodass die Summe über alle i Balken 1 ergibt und die messbare Bildeigenschaft als i-dimensionaler Vektor im Euklidischen Raum interpretierbar ist,

ein maximal tolerierbaren Clusterfehler nach der Clusterung von 0,1 vorgegeben werden,

zumindest 10 Videobilder in einem Subshot liegen,

ein Bewegungs-Algorithmus durchgeführt werden mit den Schritten 1) Bestimmung von Bewegungsvektoren v(i,j) für Pixelblöcke vorgegebener Größe, 2) Ausfilterung von Bewegungsvektoren v(i,j) von Pixelblöcken mit einer Intensitätsänderung der Pixel unterhalb eines vorgegebenen Grenzwertes, 3) Berechnung von auf die aktuelle Bildgröße (Breite, Höhe) normierten Verlagerungen für horizontale und vertikale Bewegung sowie für Zoom gemäß

$$D_h = \frac{\sum_{i,j} m(i,j)mv(i,j) \bullet v_h(i,j)}{\sum_{i,j} m(i,j)|v(i,j)|Breite} \ , \quad D_v = \frac{\sum_{i,j} m(i,j)mv(i,j) \bullet v_v(i,j)}{\sum_{i,j} m(i,j)|v(i,j)|Höhe} \ ,$$

$$D_z = \frac{\sum_{i,j} m(i,j)mv(i,j) \bullet v_z(i,j)}{\sum_{i,j} m(i,j)|v(i,j)|\sqrt{Breite * Höhe}} \ ,$$

mit $D_h$ = horizontale Verlagerung, $D_v$ = vertikale Verlagerung, $D_z$ = Verlagerung durch Zoom, i,j = Blockindizes, m(i, j) = Matrix = mit 1 für eine Intensitätsvarianz der Pixel im Block oberhalb des vorgegebenen Grenzwertes und mit 0 für eine Intensitätsvarianz der Pixel im Block unterhalb des vorgegebenen Grenzwertes, $|v(i, j)|$ = Länge des Bewegungsvektors v(i,j) mit 1 für jeden Block mit zumindest einem Bewegungsvektor und mit 0 für jeden Block außerhalb der betrachteten Reihen und Spalten sowie in der Zoommitte, und "•" =Skalarprodukt, 4) Filterung der drei richtungsabhängigen Verlagerungen $D_h$, $D_v$ und $D_z$ in einem vorgegebenen Zeitrahmen vor und nach dem mittleren Bewegungsvektor des aktuellen Videobildes zur Ausfilterung von hochfrequentem Rauschen gemäß

$$D_{dir,filt}(i) = \frac{1}{2*k+1} \sum_{j=i-k}^{j=i+k} D_{dir}(j)$$ mit dir = eine der drei Bewegungsrichtungen (h-horizontal, v-vertikal, z-Zoom),

k = Anzahl der Verlagerungswerte vor und hinter dem Verlagerungswert des aktuell betrachteten Bildpaares, i = Nummer aktuell des betrachteten Bildpaares und j = Laufindex, 5) Berechnung der Gesamtverlagerung D zwischen zwei benachbarten Videobildem gemäß D = $|D_{h,filt}|$ + $|D_{v,filt}|$ +s*$|D_{z,filt}|$ mit s = Skalierungsfaktor für den Zoom, 6) Bildung und Überprüfung der Summe Σ D aller Gesamtverlagerungen zwischen allen Paaren von zeitlich aufeinander folgenden Videobildem in einem Shot: - liegt sie unterhalb eines vorgegebenen Grenzwertes $th_d$, wird der Shot nicht in Subshots unterteilt, - liegt sie oberhalb des Grenzwertes $th_d$, wird der Shot in Subshots unterteilt, und 7) bei einer Überschreitung des Grenzwertes $th_d$: 7a) Berechnung der Anzahl #ssb der Subshots in diesem Shot gemäß #ssb = Σ D / $th_d$ mit Σ D = Summe aller Gesamtverlagerungen D in einem Shot und 7b) gleichmäßige Aufteilung des Shots in die entsprechende Anzahl von Subshots, sodass in jedem Subshot die Summe der Gesamtverlagerungen D möglichst gleich groß sind, wobei beispielsweise der Grenzwert th$_d$ = 0,5 und der Skalierungsfaktor s = 1 betragen und/oder die Anzahl k der Verlagerungswerte der halben Bildwiederholrate entspricht, und /oder
bei der Keyframe-Selektion ein beliebiges oder das mittlere Videobild aus jedem ermittelten Subshot als den Bildinhalt des Subshots repräsentierendes Keyframe ausgewählt werden.

**Patentansprüche**

1. Verfahren zum zeitlichen Segmentieren einer Sequenz von aufeinander folgenden Videobildern in kürzere Videoabschnitte mit geringer visueller Variation, mit folgenden Schritten:

   • Anwenden einer Clusterbildung auf die Videobilder ohne Berücksichtigung der zeitlichen Ordnung der Videobilder und unter Verwendung einer messbaren Bildeigenschaft der Videobilder, um die Videobilder gemäß ihrer messbaren Bildeigenschaft unterschiedlichen Clusterkennzeichnungen zuzuordnen;
   • Durchführung einer Mehrheitsfilterung, wonach eine minderheitliche Clusterkennzeichnung für ein Videobild i in eine mehrheitliche Clusterkennzeichnung derjenigen Videobilder überführt wird, die um x Videobilder gemäß der zeitlichen Ordnung der Videobilder vor und hinter dem Videobild i liegen,
   • Durchführung einer Zeitfilterung in Abhängigkeit einer vorgegeben Anzahl k, so dass für weniger als k gemäß der zeitlichen Ordnung hintereinanderliegende Videobilder mit derselben Cluster-Kennzeichnung die Clusterkennzeichnung in die Clusterkennzeichnung der davor oder dahinter liegenden Videobilder mit der größeren mittleren Ähnlichkeit überführt wird, wobei die Ähnlichkeit mit Hilfe einer Distanzfunktion für die messbaren Bildeigenschaften der Videobilder ermittelt wird, und
   • nach Mehrheits- und Zeitfilterung, Setzen von Segment-Grenzen an Stellen einer Änderung der Clusterkennzeichung in der zeitlichen Ordnung der Videobilder.

2. Verfahren nach Anspruch 1, wobei die Cluster-Bildung einen k-means-Algorithmus umfasst und die messbare Bildeigenschaft ein Histogramm mit i Balken ist und die Balken vor Anwendung des k-means-Algorithmus normalisiert werden, sodass die Summe über alle i Balken 1 ergibt und die messbare Bildeigenschaft als i-dimensionaler Vektor im Euklidischen Raum interpretierbar ist.

3. Verfahren nach Anspruch 1 oder 2, wobei das Verfahren folgenden Schritt aufweist:

   zeitliches Segmentieren eines Videos in einzelne Shots, wobei jeder Shot jeweils eine Sequenz aufeinander folgender Videobilder umfasst, die mit einer Kameraeinstellung ohne Unterbrechung aufgenommen wurden, und für jede Sequenz aufeinander folgender Videobilder die Schritte des Anwendens, Durchführens einer Mehrheitsfilterung, Durchführens einer Zeitfilterung und Setzens durchgeführt werden.

4. Verfahren nach einem der Ansprüche 1 bis 3, wobei die messbaren Bildeigenschaften eine Farb- oder Kantenverteilung eines Videobildes umfassen.

5. Verfahren nach Anspruch 4, wobei die messbare Bildeigenschaft ein Histogramm mit k Balken ist und die Distanzfunktion für die Histogramme der Videobilder F und F' definiert ist als

$$d = 1 - \frac{1}{pc}\sum_{i=1}^{k}\min(H(F,i),H(F',i))$$

mit
pc = Anzahl der für die Histogramm-Erstellung genutzten Pixel,
i = Laufindex,
k = Anzahl der Balken,
H(F,i) = iter Balken des Histogramms von Videobild F (Anzahl der Pixel mit Farbwert im iten Bereich) und
min = Minimum.

6. Verfahren zur Auswahl von Keyframes für das Auffinden von Bildinhalten eines Videos, mit folgenden Schritten:

a) zeitliches Segmentieren des Videos in einzelne Shots, wobei jeder Shot jeweils eine Sequenz aufeinander folgender Videobilder umfasst, die mit einer Kameraeinstellung ohne Unterbrechung aufgenommen wurden,

b) zeitliches Segmentieren jedes Shots in einzelne Subshots mit geringer visueller Variation gemäß einem der Ansprüche 1 bis 5, und

c) Durchführen einer Keyframe-Selektion durch, für jeden Subshot, Zuordnung von genau einem den Bildinhalt des jeweiligen Subshots repräsentierenden Keyframe aus den Videobildern des jeweiligen Subshots zu dem jeweiligen Subshot.

**7.** Verfahren nach Anspruch 6, wobei die Schritte a und b zeitgleich durchgeführt werden.

**8.** Verfahren nach Anspruch 6 oder 7, wobei das zeitliche Segmentieren jedes Shots in einzelne Subshots so durchgeführt wird, dass jeder Subshot nur maximal ein Ereignis in maximal einer Umgebung enthält und innerhalb von Shots auftretende Grenzen einer Szene, die ein Ereignis in einer kontinuierlichen Zeitperiode und einer kontinuierlichen Umgebung zeigt, gleichzeitig Subshot-Grenzen sind.

**Claims**

**1.** Method for temporal segmentation of a sequence of successive video pictures into shorter video sections that have little visual variation, comprising the following steps:

• applying a clustering to the video pictures without taking into consideration the temporal order of the video pictures and using a measurable picture property of the video pictures, in order to assign the video pictures to different cluster labels in accordance with their measurable picture property;

• performing a majority vote filtering, after which a minority cluster labeling for a video picture i is transposed into a majority cluster labeling of the video pictures that are situated by x video pictures before and after the video picture i in the temporal order of the video pictures, and

• performing a temporal filtering as a function of a givem number k, so that for less than k video pictures which are successive in the temporal order and have the same cluster labeling, the cluster labeling is transposed into the cluster labeling of the video pictures with the higher mean similarity which are situated before or after, the similarity being determined by means of a distance function for the measurable picture property of the video pictures, and

• after the majority vote and temporal filtering, placing segment boundaries at locations of a change in cluster labeling in the temporal order of the video pictures.

**2.** Method according to claim 1, wherein the clustering includes a k-means algorithm, and the measurable picture property is a histogram with i bars, and the bars are normalized before applying the k-means algorithm, so that the sum of all i bars is 1, and the measurable picture property may be interpreted as an i-dimensional vector in the Euclidean space.

**3.** Method according to claim 1 or 2, the method comprising the following step:

temporal segmentation of a video into individual shots, each shot including a sequence of successive video pictures taken by a single camera act without interruption, and the steps of applying, performing a majority vote filtering,

performing a time filtering and placing being performed for each sequence of successive video pictures.

**4.** Method according to one of claims 1 to 3, wherein the measurable picture properties include a color or edge distribution of a video picture.

**5.** Method according to claim 4, wherein the measurable picture property is a histogram with k bars, and the distance function for the histograms of the video pictures F and F' is defined as

$$d = 1 - \frac{1}{pc} \sum_{i=1}^{k} \min(H(F,i), H(F',i))$$

with
pc = number of pixels used for creating the histogram
i = run index
k = number of bars
$H(F,i)$ = $i^{th}$ bar of the histogram of video picture F (number of pixels with color value within the $i^{th}$ range)
min = minimum

6. Method for selecting key-frames for retrieving picture contents of a video, comprising the following steps:

    a) temporal segmentation of the video into individual shots, each shot comprising a sequence of successive video pictures taken by a single camera act without interruption,
    b) temporal segmentation of each shot into individual sub-shots that have little visual variation according to one of claims 1 to 5, and
    c) performing a key-frame selection by associating, with the respective sub-shot, exactly one key-frame from the video pictures of the respective sub-shot, said key-frame representing the picture content of the respective sub-shot, for each sub-shot.

7. Method according to claim 6, wherein the steps a and b are performed simultaneously.

8. Method according to claim 6 or 7, wherein the temporal segmentation of each shot into individual sub-shots is performed so that each sub-shot contains a maximum of only one event in a maximum of one setting, and that boundaries of a scene which occur within shots showing an event in a continuous period of time and a continuous setting are at the same time sub-shot boundaries.

**Revendications**

1. Procédé pour segmenter dans le temps une séquence d'images vidéo successives en segments vidéo plus courts à faible variation visuelle, aux étapes suivantes consistant à:

    • appliquer une formation de groupes aux images vidéo, sans tenir compte de l'ordre dans le temps des images vidéo et à l'aide d'une propriété d'image mesurable des images vidéo, pour associer les images vidéo selon leur propriété d'image mesurable à différentes identifications de groupe;
    • effectuer une filtration multiple, après quoi une identification de groupe minoritaire d'une image vidéo i est transposée à une identification de groupe majoritaire des images vidéo qui se situent x images vidéo, selon l'ordre dans le temps des images vidéo, avant et après l'image vidéo i,
    • effectuer une filtration temporelle en fonction d'un nombre k prédéterminé, de sorte que, pour moins de k images vidéo situées l'une derrière l'autre, selon l'ordre dans le temps, à la même identification de groupe, l'identification de groupe est transposée à l'identification de groupe des images vidéo situées avant ou après à la similitude moyenne la plus grande, la similitude étant déterminée à l'aide d'une fonction de distance pour les propriétés d'image mesurables des images vidéo, et
    • après filtration majoritaire et temporelle, placer des limites de segment à des endroits de changement de l'identification de groupe dans l'ordre dans le temps des images vidéo.

2. Procédé selon la revendication 1, dans lequel la formation de groupes comporte un algorithme de moyenne k et la propriété d'image mesurable est un histogramme à i barres et les barres sont normalisées avant application de l'algorithme de moyenne k, de sorte que la somme sur les i barres donne 1 et que la propriété d'image mesurable puisse être interprétée comme vecteur i-dimensionnel dans l'espace d'Euclide.

3. Procédé selon la revendication 1 ou 2, dans lequel le procédé présente les étapes suivantes consistant à:

    segmenter dans le temps une vidéo en prises de vue individuelles, chaque prise de vue comprenant une séquence d'images vidéo successives qui ont été prises sans interruption avec un réglage de caméra, et pour chaque séquence d'images vidéo successives étant effectuées les étapes d'application, de réalisation d'une filtration majoritaire, de réalisation d'une filtration dans le temps et de placement.

4. Procédé selon l'une des revendications 1 à 3, dans lequel les propriétés d'image mesurables comprennent une répartition de couleurs ou de bords d'une image vidéo.

5. Procédé selon la revendication 4, dans lequel la propriété d'image mesurable est un histogramme à k barres et la fonction de distance pour les histogrammes des images vidéo F et P est définie comme

$$d = 11 - \frac{1}{pc} \sum_{i=1}^{k} \min\bigl(H(F,i), H(F',i)\bigr)$$

avec
pc = nombre de pixels utilisés pour l'établissement de
l'histogramme,
i = indice courant,
k = nombre de barres,
H(F,i) = i-ièmes barres de l'histogramme de l'image vidéo F (nombre de pixels avec valeur de couleur dans la i-ième zone), et min = minimum.

6. Procédé de sélection de trames clés pour trouver des contenus d'une vidéo, aux étapes suivantes consistant à:

a) segmenter dans le temps la vidéo en prises de vue individuelles, chaque prise de vue comprenant une séquence d'images vidéo successives qui ont été prises sans interruption avec un réglage de caméra,
b) segmenter dans le temps chaque prise de vue en sous-prises de vue individuelles à faible variation visuelle selon l'une des revendications 1 à 5, et
c) effectuer une sélection de trame clé en associant, pour chaque sous-prise de vue individuelle, à la sous-prise de vue respective exactement une trame clé, représentant le contenu d'image de la sous-prise de vue respective, parmi les images vidéo de la sous-prise de vue respective.

7. Procédé selon la revendication 6, dans lequel les étapes a et b sont réalisées en même temps.

8. Procédé selon la revendication 6 ou 7, dans lequel la segmentation dans le temps de chaque prise de vue en sous-prises de vue individuelles est réalisée de sorte que chaque sous-prise de vue ne contienne que maximum un événement dans maximum un environnement et que les limites se présentant dans des prises de vue d'une scène illustrant un événement dans une période de temps continue et un environnement continu sont en même temps des limites de sous-prise de vue.

| Programm-ebene | Nachrichten | Spielfilm | Werbung | Spielfilm |
|---|---|---|---|---|

| Szenen-ebene | Szene 1 | Szene 2 | Szene 3 | Szene 4 | Szene 5 |
|---|---|---|---|---|---|

| Shot-ebene | Shot 1 | Shot 2 | Shot 3 |
|---|---|---|---|

| Subshot-ebene | Subshot 1 | Subshot 2 | Subshot 3 | Subshot 4 | Subshot 5 |
|---|---|---|---|---|---|

Bild-ebene — Bilder

## Fig.1

Abstand

eingefügte Subshot-Grenze

Schwellwert

Bild

## Fig.2

Bild-Nr.: i-x i i+x

Gleitfenster

a) ...AAAAABABBBBBBCCBBBBBB...

b) .......AAABBBBBBBBBBBBB.......

Fig.3

Shot-
Grenze

Cluster-Begrenzung

AAAAAAAAAAABBBBBBBBBBBBBBBBBAAAAAAAAAAAAA

eingefügte Subshot-Grenzen

Bild-Nrn.

Fig.4

a) horizontal

b) vertikal

Bewegungsvektoren v(ij) von
8x8 Blöcken (ij)

j

i     c) zoom

# Fig.5

Ergebnis Durchschnitt

+ Schwellwert
× Cluster
✳ Bewegung

Präzision

Wiederfindung

# Fig.6

## IN DER BESCHREIBUNG AUFGEFÜHRTE DOKUMENTE

**In der Beschreibung aufgeführte Patentdokumente**

- US 7127120 B2
- US 20040012623 A

**In der Beschreibung aufgeführte Nicht-Patentliteratur**

- **H. Sundaram et al.** *Determining Computable Scenes in Films and their Structures using Audio-Visual Memory Models,* 2000
- **K. Hoashi et al.** Shot Boundary Determination on MPEG Compressed Domain and Story Segmentierung Experiments for TRECVID 2004. *TREC Video Retrieval Evaluation Online Proceedings, TRECVID,* 2004
- **S. Treetasanatavorn et al.** Temporal Video Segmentierung Using Global Motion Estimation and Discrete Curve Evolution. *Proc. IEEE ICIP, International Conference on Image Processing,* Oktober 2004, 385-388
- **J. Maeda.** Method for extracting camera operations in order to describe subscenes in video sequences. *Proc. SPIE -- Volume 2187, Digital Video Compression on Personal Computers: Algorithms and Technologies,* Mai 1994, vol. 2187, 56-67
- **Zhuang et al.** Adaptive key frame extraction using unsupervised clustering. *Proc. IEEE Int. Conf. Image Processing,* 1998, 866-870
- **J. Kang et al.** An Effective Method For Video Segmentierung And Sub-Shot Characterization. *ICASSP 2002, Proc.,* 2002, vol. 4, IV-3652-3655
- **Zhang et al.** An integrated system for content-based video retrieval and browsing. *Pattern Recognition,* 1997, vol. 30 (4), 643-658
- **HONG LU et al.** Shot boundary detection using unsupervised clustering and hypothesis testing. *COMMUNICATIONS, CIRCUITS AND SYSTEMS, 2004. ICCCAS 2004. 2004 INTERNAT IONAL CONFERENCE ON CHENGDU,* 27. Juni 2004, vol. 2, ISBN 978-0-7803-8647, 932-936
- **C. Petersohn.** Fraunhofer HHI at TRECVID 2004: Shot Boundary Detection System. *TREC Video Retrieval Evaluation Online Proceedings, TRECVID,* 2004
- **C. Petersohn.** Dissolve Shot Boundary Determination. *Proc. IEE European Workshop on the Integration of Knowledge, Semantics and Digital Media Technology,* 2004, 87-94
- **C. Petersohn.** Wipe Shot Boundary Determination. *Proc. IS&T/SPIE Electronic Imaging 2005, Storage and Retrieval Methods and Applications for Multimedia,* 2005, 337-346
- **R. Lienhart.** Comparison of Automatic Shot Boundary Detection Algorithms. *Proc. SPIE Storage and Retrieval for Image and Video Databases VII,* 1999, vol. 3656, 290-301